# EUROPEAN PATENT SPECIFICATION

(11) **EP 3 993 929 B1**
(45) Date of publication and mention of the grant of the patent: **31.12.2025**
(21) Application number: 20743372.3
(22) Date of filing: 30.06.2020
(51) Int. Cl.: B23B 5/28, B23B 1/00, B23B 31/40

(54) **EQUIPMENT AND METHOD TO WORK RAILWAY WHEELS**
VORRICHTUNG UND VERFAHREN ZUM BEARBEITEN VON EISENBAHNRÄDERN
ÉQUIPEMENT ET PROCÉDÉ POUR USINER DES ROUES DE CHEMIN DE FER

(30) Priority: 04.07.2019 IT 201900010926
(43) Date of publication of application: 11.05.2022
(73) Proprietor: Meccanotecnica S.r.l., 33038 San Daniele Del Friuli (IT)
(72) Inventor: COLLINO, Italo, 33030 FORGARIA NEL FRIULI (IT); TIGNONSINI, Zaverio, 25047 DARFO BOARIO TERME (IT)
(74) Representative: Petraz, Gilberto Luigi
(86) International application number: PCT/IT2020/050167
(87) International publication number: WO 2021/001864

(56) References cited:
- EP-A1- 1 588 868
- EP-A1- 1 737 681
- EP-A1- 3 075 473
- DE-A1- 2 635 710
- DE-U1- 202011 050 262
- GB-A- 1 565 062
- US-A- 1 759 098
- US-A1- 2007 107 547

## Description

### FIELD OF THE INVENTION

The present invention concerns equipment to work railway wheels that can be installed, for example, on freight trains, subway trains and high-speed trains or other types of railway trains.

In particular, the equipment can be used to perform one or more mechanical working operations with removal of material, both roughing and finishing, on an untreated wheel to obtain a finished wheel with the technical characteristics - dimensional tolerances, surface finish, profile circularity, absence of defects, etc. - required by the particular application that they will serve.

### BACKGROUND OF THE INVENTION

It is known that mechanical workings with the removal of material, for example turning, of railway wheels entail the working of large components - from about 400mm to about 1400mm and more - and of great weight - from about 500kg to about 1300kg and more - in work centers, mostly with numerical control, which have to guarantee specific characteristics and requirements according to the particular application that they will serve.

If, for example, for freight trains, which are very heavy vehicles provided with wheels that can reach rather high levels of wear, the dimensional tolerances are less important, for high-speed trains, compliance with the characteristics and requirements required is fundamental, both to guarantee a high level of comfort to passengers during the journey, and also because the high speeds determine very significant mechanical stresses on the wheels, and in general on the components that determine the movement and stoppage of the train.

To meet these requirements, for example, great precision of the circularity of the rolling surface of the wheel may be required, with rather limited tolerances. The wheel can possibly provide a profile of the web, that is, the portion comprised between the hub and the rolling surface, with particular grooves so as to reduce noise.

The most common process for the production of railway wheels provides to heat, for example in a rotary furnace, a semi-finished metal product, typically obtained from a rolled metal product, and subsequently a forging process during which a first shape is conferred on the semi-finished product, simultaneously increasing its mechanical properties. After the forging process there typically follows the creation of a central pre-hole, a forging process by rolling, a bending process, a hardening process, and mechanical testing. At the end of these processes, an untreated wheel is obtained, ready for the subsequent mechanical workings.

Currently, railway wheels are worked in work centers for the removal of material with a vertical axis, provided with equipment that comprises:
- a mandrel rotating on a vertical axis on which the untreated wheel is positioned, rotated alternately with respect to a first face and a second face;
- a clamping device associated with the mandrel and configured to hold the untreated wheel with respect to gripping points disposed on the rolling surface of the untreated wheel and with respect to which it exerts a holding action in a radial centripetal direction from the outside to the inside;
- and a work unit suitable to remove excess material from the untreated wheel and to shape its profile.

An example of this known application is described in document US-A-1,759,098. In this known solution, a lathe is described which is provided with a frame and a table rotating around a central hollow shaft with a vertical axis, which extends through the frame. The lathe is used for working on an automobile wheel. The latter is kept fixed to the rotating table, resting against mechanical gripping elements associated with the rotating table, by means of a device that engages the wheel hub. The latter provides further mechanical gripping elements that radially engage the hub from the inside.

When the wheel is positioned, the rotation movement is imparted by the mechanical gripping elements on which the wheel itself lies, and which are in turn made to rotate by the rotating table with which they are associated. For the purposes of working the wheel, this known solution necessarily requires that the same wheel is disposed resting on the mechanical gripping elements on the rotating table in two different positions, each having the respective face of the hub toward the outside, and that the mechanical working is subsequently carried out in these two different positions.

This aspect, which implies the repositioning of the wheel with each working of a given surface, increases the working times and can reduce the accuracy of the working. Another disadvantage of the known equipment is that the clamping device acts directly on the rolling surface of the wheel, compromising its circularity. This requires subsequent working, increasing production times and the complexity of the operations to be performed.

Another disadvantage lies in the fact that the material removed can remain on the surface of the wheel, causing unwanted lining, or it can create problems in the movement of the mandrel. This requires a rather thorough cleaning of the mandrel during the movement of the wheel for working the first or second surface, increasing production times.

In the known work centers described above, typically a handling device picks up the untreated wheel in the vertical position and positions it resting horizontal, for example on a second face, on the mandrel on which it is held by the clamping device while the work unit removes the material, for example, on a first face. Subsequently, the handling device picks up the untreated wheel, rotating it and positioning it resting on the mandrel with respect to the first face just worked, in order to allow the second face to be worked.

However, repositioning the untreated wheel to allow it to be completely worked entails positioning errors on the mandrel which can compromise the parallelism between the surfaces worked. In particular, an imperfect parallelism and/or symmetry of the surfaces of the first and second faces of the wheel, which cooperate, during use, with the mechanical braking device of the train, can entail imbalances of the wheel and its faster deterioration over time.

US 1 759 098 A shows an equipment to work, by removing material, an untreated metal wheel provided with a central through pre-hole, to make railway wheels. Said equipment comprises a rotating mandrel having a gripping end provided with an expansion gripper, a drive device configured to selectively activate/deactivate a divarication of said expansion gripper and two tools for removing material.

Document EP-A-1.737.681 describes a method to produce a wheel made of light aluminum, for example for a vehicle such as an automobile. This type of wheel has to be extremely light, so as not to affect the fuel consumption of the automobile. The problems encountered in the equipment and methods for making railway wheels are completely different, given that the great weight limits the more traditional solutions.

There is therefore a need to perfect equipment and method to work railway wheels that can overcome at least one of the disadvantages of the state of the art.

In particular, one purpose of the present invention is to provide equipment to work railway wheels that allows to reduce the working times and at the same time allows to reduce the number of work centers necessary for the purpose.

Another purpose of the present invention is to provide equipment to work railway wheels that allows to increase the degree of precision of the workings performed.

Another purpose of the present invention is to provide equipment to work railway wheels that allows to hold an untreated wheel during the workings, preventing deformations of the rolling surface.

Another purpose of the present invention is to perfect a method which uses the equipment as above to work railway wheels.

The Applicant has devised, tested and embodied the present invention to overcome the shortcomings of the state of the art and to obtain these and other purposes and advantages.

### SUMMARY OF THE INVENTION

The present invention is defined by the independent claims. The dependent claims describe embodiments of the present invention.

According to a first aspect of the present invention, equipment according to claim 1 is provided to work, by removing material, an untreated metal wheel provided with a central through pre-hole, to make railway wheels. The equipment comprises a rotating mandrel having a gripping end configured to be inserted axially in said pre-hole to determine a rotation of said untreated wheel around a central axis of rotation disposed horizontally.

The gripping end is provided with an expansion gripper configured to be radially opened with respect to the central axis of rotation toward an internal surface of the pre-hole to exert on the untreated wheel a holding action in a radial centrifugal direction, from the inside toward the outside, with respect to the central axis of rotation, and to transfer the rotation around the central axis of rotation to the untreated wheel.

Moreover, the equipment comprises a drive device configured to selectively activate/ deactivate a divarication of said expansion gripper to hold/release said untreated wheel, said drive device comprising a central pin mobile coaxially to said mandrel toward/away from said mandrel and cooperating with said mandrel to determine the activation/deactivation of said expansion gripper, said central pin comprising at least one flared portion converging toward said axis of rotation and cooperating, during use, with said mandrel to determine the activation of said expansion gripper.

The equipment comprises at least two tools to work, by removing material, disposed respectively on one side and on the other with respect to a work plane of the untreated wheel, the work plane being disposed vertically, essentially orthogonal to the central axis of rotation in correspondence with the gripping end. Each of the two work tools is mounted on a transport slider mobile in at least three degrees of freedom with respect to the work plane.

The mandrel is configured to engage the untreated wheel, in order to hold it radially and to rotate it around the central axis of rotation, exclusively on the respective central hub, so that the untreated wheel is free from peripheral supports or holds, so that the at least two tools are able to work, by removing material, the untreated wheel on both faces of the untreated wheel, opposite with respect to the work plane, keeping the untreated wheel axially positioned without needing to be flipped, on each occasion, with respect to the work plane.

In accordance with a second aspect of the present invention, a method according to claim 10 is provided to work, by removing material, an untreated metal wheel provided with a central through pre-hole, in particular to produce railway wheels by using an equipment according to the first aspect of the present invention.

The method provides to axially insert the gripping end of the mandrel as above in the pre-hole and to rotate the mandrel to determine a rotation of the untreated wheel around the horizontal central axis of rotation.

The method also provides to hold the untreated wheel in a centrifugal radial direction, from the inside toward the outside, with respect to the central axis of rotation by means of an expansion gripper provided in correspondence with the gripping end, which is radially opened with respect to the central axis of rotation toward the internal surface of the pre-hole in order to hold the untreated wheel radially and to determine its rotation around the central axis of rotation.

The method also provides to remove metal material from the untreated wheel by means of at least two tools, positioned respectively on one side and on the other with respect to a work plane of the untreated wheel, the work plane being disposed vertically, essentially orthogonal to the central axis of rotation in substantial correspondence with the gripping end, the at least two tools each being mounted on a respective transport slider which moves in at least three degrees of freedom with respect to the work plane, wherein said transport sliders are mobile on an inclined plane, downward, with respect to the work plane so as to facilitate the outflow due to gravity of the material removed from said untreated wheel.

The mandrel as above engages the untreated wheel, in order to hold it radially and to rotate it around the central axis of rotation, exclusively on the respective central hub, so that the untreated wheel is free from peripheral supports or holds, so that the at least two tools perform the working, by removing material, of the untreated wheel on both faces of the untreated wheel, opposite with respect to the work plane, keeping the untreated wheel axially positioned without needing to be flipped, on each occasion, with respect to the work plane.

### DESCRIPTION OF THE DRAWINGS

These and other characteristics and advantages of the present invention will become apparent from the following description of some embodiments, given as a non-restrictive example with reference to the attached drawings wherein:
- fig. 1 is a partly sectioned lateral view of equipment to work railway wheels in accordance with one embodiment described here;
- fig. 2 is a partly sectioned lateral view of equipment to work railway wheels in accordance with another embodiment described here;
- fig. 3 is a variant of fig. 1.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF SOME EMBODIMENTS

We will now refer in detail to the various embodiments of the invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants. Before describing these embodiments, we must also clarify that the present description is not limited in its application to details of the construction and disposition of the components as described in the following description using the attached drawings. We must also clarify that the phraseology and terminology used here is for the purposes of description only, and cannot be considered as limitative.

Embodiments described using the attached drawings concern equipment to work railway wheels, indicated as a whole with reference number 10 in the attached drawings.

In accordance with the invention, the equipment 10 is suitable to work, by removing material, an untreated metal wheel 11 provided with a central through pre-hole 12, to make railway wheels. More generally, the equipment 10 is suitable to work solid cylindrical semi-finished metal products, that is, disk shaped, provided with a central pre-hole 12 in order to hold them. In particular, the equipment 10 can be used both for so-called roughing and also finishing workings, respectively to remove more or less material.

The equipment 10 comprises a rotating mandrel 13 which has a gripping end 14 configured to be inserted axially in the pre-hole 12 to determine a rotation of the untreated wheel 11 around a central axis of rotation Z.

The gripping end 14 is provided with an expansion gripper 15 configured to be radially opened with respect to the central axis of rotation Z toward an internal surface 16 of the pre-hole 12 to exert on the untreated wheel 11 a holding action in the centrifugal radial direction, from the inside toward the outside, with respect to the central axis of rotation Z, and to transfer the rotation around the central axis of rotation to the untreated wheel.

The equipment 10 comprises at least two tools 17 to work, by removing material, disposed respectively on one side and on the other with respect to a work plane P disposed vertically, essentially orthogonal to the central axis of rotation Z in substantial correspondence with the gripping end 14. Each of the tools 17 is mounted on a transport slider 18 mobile in at least three degrees of freedom with respect to the work plane P.

The mandrel 13 is configured to engage the untreated wheel 11, in order to hold it radially and to rotate it around the central axis of rotation Z, exclusively on the respective central hub 19, so that the untreated wheel 11 is free from peripheral supports or holds, so that the at least two tools 17 are able to work, by removing material, the untreated wheel 11 on both faces of the untreated wheel 11, opposite with respect to the work plane P, keeping the untreated wheel 11 axially positioned without needing to be flipped, on each occasion, with respect to the work plane P.

The central axis of rotation Z is an axis of symmetry for the untreated wheel 11 and is disposed horizontally. The work plane P is substantially orthogonal to the central axis of rotation Z and is disposed vertically. The untreated wheel 11 is therefore disposed vertically during working in accordance with the present description, according to the typical disposition with which it will be installed on a train or in general on a train carriage. In this way, during working, the evacuation of the material removed from the untreated wheel 11 with the tools 17 is facilitated, preventing this material from interfering with the rotation of the mandrel 13 and/or from causing scratches on the surface just worked.

In accordance with some embodiments, the work plane P vertically divides the untreated wheel 11 defining a first face 25 and a second face 26, opposite the first face 25 with respect to the work plane P.

In accordance with possible embodiments, the work plane P can be a plane of symmetry at least for the untreated wheel 11. However, it is not excluded that the work plane P is translated with respect to a center plane, that is, displaced toward the first face 25 or toward the second face 26 in relation to the profile made by the previous workings, for example by the forging workings.

In accordance with some embodiments, the untreated wheel 11 has a substantially cylindrical shape, possibly partly pre-shaped, and comprises a central zone 19, or hub, in correspondence with which the pre-hole 12 is present, a peripheral zone 20, or rim, which has a rolling surface 22, circumferential and facing outward, and an intermediate zone 21, or web, provided between the central zone 19 and the peripheral zone 20.

Each first face 25 and second face 26 has the central zone 19, the peripheral zone 20 and the intermediate zone 21 as above.

The peripheral zone 20 also extends in a circumferential direction, thus comprising the rolling surface 22 as above. The rolling surface 22 is the surface with respect to which the wheel, finished and installed on a train, rolls on the respective rail.

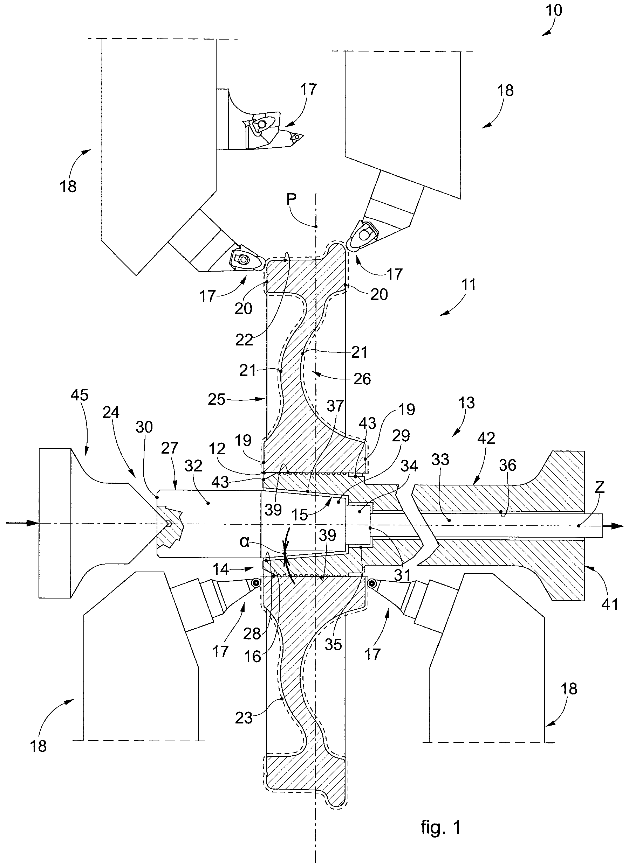

The equipment 10 is suitable to work an untreated wheel 11 which already has an overall profile that approaches the profile of the finished wheel, apart from a quantity of material to be removed 23, or allowance, visible in a dotted line in figs. 1-2, which is removed by the tools 17 during the workings, for example roughing and finishing workings. This is both because it is necessary to guarantee determinate mechanical properties to the untreated wheel 11 - for example with workings such as forging - and also to avoid carrying out financially very expensive workings such as those with removal of material.

Since the mandrel 13 holds the untreated wheel 11 from the inside, that is, in correspondence with the internal surface 16 of the pre-hole 12, the surface of the untreated wheel 11 defined by the peripheral zone 20 and the intermediate zone 21 is completely available to be worked by the tools 17. This allows to prevent movement and repositioning of the untreated wheel 11, considerably increasing the degree of precision of the working performed. In particular, holding the untreated wheel 11 with respect to the pre-hole 12 is advantageous because it allows to simultaneously work both faces 25, 26 of the untreated wheel 11 reducing the overall working time. In addition, the central hold from the inside as above allows to prevent deformations of the rolling surface 22, the perfect circularity of which is an essential prerequisite for installing the finished wheel, particularly in high-speed railway applications.

The equipment 10 comprises a drive device 24 configured to selectively activate/deactivate the divarication of the expansion gripper 15 to hold/release the untreated wheel 11.

The drive device 24 comprises a central pin 27 mobile coaxially to the mandrel 13, toward/away from the mandrel 13 and cooperating with the mandrel 13 to determine the activation/deactivation of the expansion gripper 15. The central pin 27 rotates integrally with the mandrel 13.

The central pin 27 has a longitudinal development along the central axis of rotation Z and has a variable cross-section, with respect to a plane orthogonal to the central axis of rotation Z, for example converging toward the central axis of rotation Z.

The central pin 27 can comprise at least one flared portion 29 converging toward the central axis of rotation Z and cooperating, during use, with the mandrel 13 to determine the activation of the expansion gripper 15.

In accordance with some embodiments, the flared portion 29 can have a truncated-cone shape.

In accordance with possible embodiments, the flared portion 29 has a truncated-cone shape and can have a single angle of inclination α which defines its taper, comprised between about 10° and about 25°.

In accordance with other possible embodiments, the flared portion 29 can have a multi-truncated cone shape defined by a plurality of truncated-cone surfaces that develop around the central axis of rotation Z, with angles of inclination α that differ from each other in a progressive manner. Advantageously, this multi-truncated cone shape allows to produce a hold of the adaptive type increasing the contact surface with respect to the solution with a single truncated-cone shape.

In accordance with other possible solutions, the flared portion 29 can be defined, for example, by the rotation of a curve around the central axis of rotation Z.

In accordance with other possible solutions, the flared portion 29 can have a pyramidal shape, in particular a truncated pyramidal shape. In this case, the flared portion 29 can for example be made starting from a truncated-cone shape which has pyramidal facets.

In accordance with possible embodiments, the central pin 27 can comprise one or more other cylindrical portions disposed with respect to opposite ends of the flared portion 29, figs. 1-2.

In accordance with some embodiments, the central pin 27 is provided with a thrust end 30 and with an opposite abutment end 31.

The central pin 27 comprises a cylindrical thrust portion 32, in correspondence with the thrust end 30, configured to be thrust toward the work plane P and an abutment portion 34, in correspondence with the abutment end 31, configured to define a position of engagement or coupling of the central pin 27 with the mandrel 13. The flared portion 29 is disposed between the thrust portion 32 and the abutment portion 34.

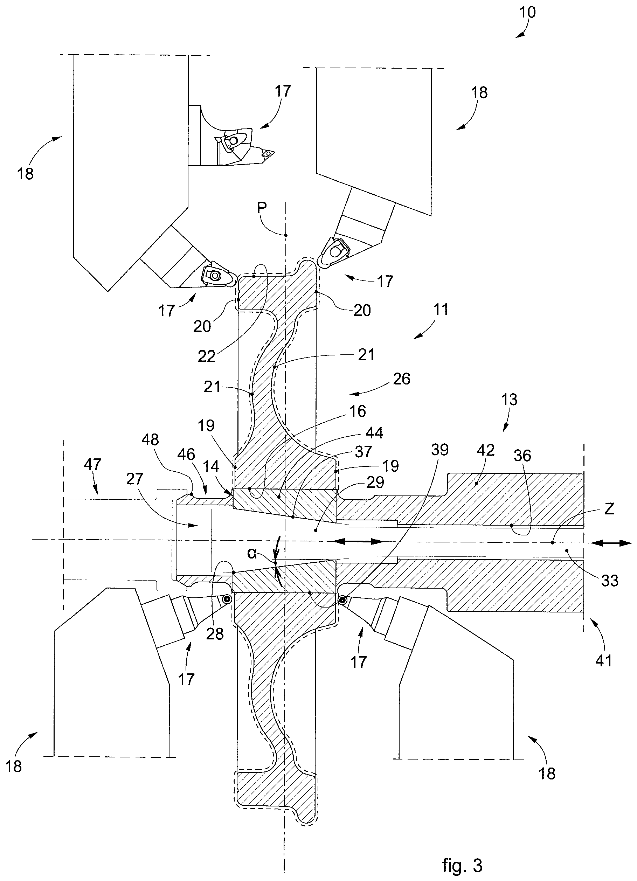

In accordance with some embodiments, shown in fig. 1 and fig. 3, the central pin 27 comprises a stem 33 that has a longitudinal development along the central axis of rotation Z, starting from the abutment end 31 in an opposite direction to the flared portion 29 (fig. 1), or starting from the flared portion 29 (fig. 3).

According to some embodiments, the stem 33 is configured to be pulled away from the work plane P in the direction of the central axis of rotation Z to activate the divarication of the expansion gripper 15.

The cylindrical thrust section 32 can have a greater cross-section than, for example, the cross-section of the stem 33 to avoid peak loads which can cause unwanted flexions.

The cylindrical thrust section 32 can be provided, in correspondence with the thrust end 30, with a cavity suitable to receive a device 45 for thrusting the equipment 10.

The thrust device 45 can also be provided to prevent the untreated wheel 11 - mandrel 13 assembly from flexing during working since the weight of the untreated wheel 11 can be even very significant, for example up to 1300 kg and more. The presence of the thrust device 45, consequently, contributes to guaranteeing the perfect flatness of the workings performed on the first face 25 and on the second face 26.

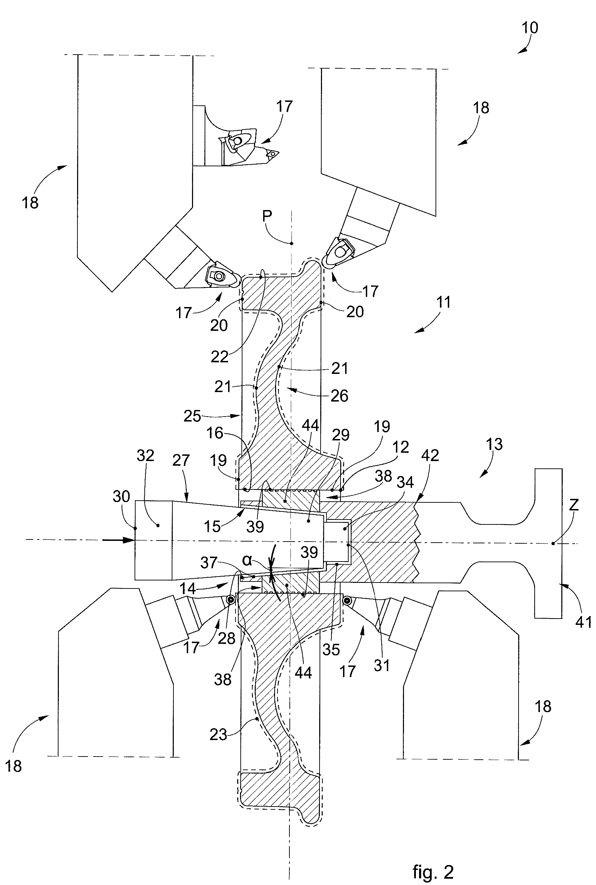

In accordance with some embodiments, shown in fig. 2, the central pin 27 can be directly coupled with a tailstock, defining a pin-tailstock assembly 27.

In accordance with some embodiments, the mandrel 13 comprises a coupling end 41, opposite the gripping end 14, and with respect to which the mandrel 13 is coupled with a movement device, not shown, which allows it to rotate around the central axis of rotation Z.

The mandrel 13 comprises a body 42 that has a substantially tubular shape and is provided with the expansion gripper 15.

In accordance with some embodiments, shown in fig. 1 and fig. 3, the body 42 is provided with a longitudinal groove that has a radial depth toward the central axis of rotation Z such as to allow the tools 17 to work the untreated wheel 11 even in the proximity of the pre-hole 12. In this way, other handlings of the wheel to carry out all the workings with removal of material are not necessary.

The mandrel 13 can hold the untreated wheel 11 with respect to the pre-hole 12 by engaging the pre-hole 12 indifferently both from face 25 and also from face 26.

The body 42 is positioned, therefore, on one side or on the other with respect to the work plane P.

In accordance with some embodiments, the mandrel 13 has, in correspondence with the gripping end 14, an aperture 28 which has a longitudinal development along the central axis of rotation Z and has a variable cross-section, with respect to a plane orthogonal to the central axis of rotation Z, for example converging toward the central axis of rotation Z from the gripping end 14 to the coupling end 41.

The aperture 28 develops coaxially, with respect to the central axis of rotation Z, and is shaped so as to have at least one tapered portion 37, converging toward the central axis of rotation Z, suitable to couple with the flared portion 29 of the central pin 27 of the drive device 24.

In accordance with some embodiments, the tapered portion 37 of the aperture 28 has a taper, or multi-taper, equal to or coordinated with the taper, or multi-taper, of the flared portion 29 of the central pin 27.

With particular reference to figs. 1-2, the aperture 28 can comprise one or more other cylindrical portions suitable to receive the auxiliary cylindrical portions of the central pin 27.

The cylindrical portions of the aperture 28 can have a slightly smaller diameter than the other cylindrical portions of the central pin 27 to prevent sliding and/or excessive friction during the rotation of the mandrel 13.

In accordance with some embodiments, shown in figs. 1-2, the aperture 28 comprises a cylindrical portion 35 configured to receive the abutment portion 34 and to define an end-of-travel shoulder for the central pin 27.

In accordance with some embodiments, shown in fig. 1, the aperture 28 comprises a channel 36 into which the stem 33 is inserted, during use.

According to one variant, shown in fig. 3, the mandrel 13 has a gripping portion 46 associated with the gripping end 14 on the opposite side with respect to the expansion gripper 15. The gripping portion 46 has a substantially cylindrical shape and has a through cavity coaxial with the central axis of rotation Z and communicating with the aperture 28. The gripping portion 46 is associated on one side with the gripping end 14 and on the opposite side is able to be held by a tailstock 47.

According to some embodiments, the tailstock 47 can be of the cup-shaped type and hold the gripping portion 46 with respect to an external surface 48 thereof. The cup-shaped tailstock 47 can have a cup-shaped end portion with flare-shaped inclined walls, in particular truncated-cone or similar. The gripping portion as above has a shape mating with the cup-shaped end portion of the tailstock. In particular, the end of the tailstock 47 which operates the hold and the corresponding end of the gripping portion 46 which is held can have a truncated-cone profile mating with each other to define a coordinated truncated-cone geometric coupling. The solution with cup-shaped tailstock 47 allows to support the untreated wheel 11 in a more stable manner, furthermore, the mating truncated-cone shaped contact surfaces allow a more effective and safe hold.

In accordance with some embodiments, shown for example with reference to fig. 2, the expansion gripper 15 comprises a plurality of inserts 38 that have an internal surface, defined by the tapered portion 37, and an external contact surface 39 substantially parallel to the central axis of rotation Z and configured to contact the internal surface 16 of the pre-hole 12 to hold the untreated wheel 11.

The inserts 38 are configured to undergo a thrust in a substantially radial direction toward the peripheral zone or rim 20, in particular in the direction of the rolling surface 22.

The coupling defined between the flared portion 29 of the central pin 27 with the tapered portion 37 of the mandrel 13, and the thrust/traction action of the central pin 27 generate radial holding forces with respect to the central axis of rotation Z which allow to activate the expansion gripper 15 in order to hold the untreated wheel 11. In particular, such coupling causes a radial thrust toward the outside of the inserts 38 to hold the untreated wheel 11.

In accordance with possible embodiments, the external contact surface 39 of the inserts 38 can be at least partly knurled to increase the effectiveness of the hold with the internal surface 16, figs. 1-2.

In accordance with possible solutions, with particular reference to figs. 1-2, the external contact surface 39 is defined to contact only one part of the internal surface 16 of the pre-hole 12. In particular, the external contact surface 39 can have discharge portions 43 disposed, during use, in correspondence with respective apertures of the pre-hole 12 on the first face 25 and on the second face 26. This advantageously allows the tools 17 to work the untreated wheel 11 also in the proximity of the pre-hole 12, preventing movements and/or repositioning of the untreated wheel 11.

In accordance with some embodiments, shown in fig. 2, each insert 38 can comprise a holding portion 44 on which the external contact surface 39 as above is defined.

The holding portion 44 can be made in a single body with the insert 38 or it can be made integral with it. In this second case, it can be provided to make the holding portion 44 in a different material than the one the insert 38 consists of.

In accordance with possible embodiments, the drive device 24 can be an integral part of the mandrel 13.

In accordance with some embodiments, the expansion gripper 15 can be driven pneumatically or hydraulically.

In accordance with some embodiments, the transport sliders 18 are mobile on an inclined plane, downward, with respect to the work plane P so as to facilitate the outflow due to gravity of the material removed from the untreated wheel 11. In particular, such inclined plane can be inclined at an angle of about 45°.

In accordance with some embodiments, shown in figs. 1-2, the equipment 10 comprises four tools 17 to work, by removing material, two of which are disposed on one side of the work plane P and the other two of which are disposed on the other side of the work plane P. Advantageously, in this way it is possible to further reduce the working times and/or reduce the wear of the tools 17 since the quantity of material to be removed 23 for each revolution of the untreated wheel 11 can be halved.

In accordance with the invention, a method is provided to work, by removing material, an untreated metal wheel 11 provided with a central through pre-hole 12, to produce railway wheels.

The method provides to axially insert the gripping end 14 of the mandrel 13 in the pre-hole 12 and rotate the mandrel 13 to determine a rotation of the untreated wheel 11 around the central axis of rotation Z.

The method also provides to hold the untreated wheel 11 in a radial centrifugal direction, from the inside toward the outside, with respect to the central axis of rotation Z by means of an expansion gripper 15, provided in correspondence with the gripping end 14, the expansion gripper 15 being radially opened with respect to the central axis of rotation Z toward the internal surface 16 of the pre-hole 12 in order to hold the untreated wheel 11 radially and rotate it around the central axis of rotation Z.

The method also provides to remove metal material from the untreated wheel 11 by means of at least two tools 17, positioned respectively on one side and on the other with respect to the work plane P of the untreated wheel 11, the work plane P being disposed vertically, essentially orthogonal to the central axis of rotation Z in substantial correspondence with the gripping end 14. Each of the at least two tools 17 is mounted on a respective transport slider 18 which moves in at least three degrees of freedom with respect to the work plane P.

In accordance with the method described here, the mandrel 13 engages the untreated wheel 11, in order to hold it radially and rotate it around the central axis of rotation Z, exclusively on the respective central hub 19, so that the untreated wheel 11 is free from peripheral supports or holds, so that the at least two tools 17 perform the working, by removing material, of the untreated wheel 11 on both faces of the untreated wheel 11, opposite with respect to the work plane P, keeping the untreated wheel 11 axially positioned without needing to be flipped, on each occasion, with respect to the work plane P.

In accordance with some embodiments, the at least two tools 17 as above work simultaneously on the untreated wheel 11.

In particular, a first tool 17 can work on the first face 25 and a second tool 17 can work on the second face 26 simultaneously.

This allows to significantly reduce working times.

It is clear that modifications and/or additions of parts or steps may be made to the equipment and the method to work railway wheels as described heretofore, without departing from the field and scope of the present invention as defined by the appended claims.

In the following claims, the sole purpose of the references in brackets is to facilitate reading: they must not be considered as restrictive factors with regard to the field of protection claimed in the specific claims.

## Claims

1. Equipment to work, by removing material, an untreated metal wheel (11) provided with a central through pre-hole (12), to make railway wheels, said equipment comprising:
- a rotating mandrel (13) having a gripping end (14) configured to be inserted axially in said pre-hole (12) to determine a rotation of said untreated wheel (11) around a central axis of rotation (Z) disposed horizontally, said gripping end (14) being provided with an expansion gripper (15) configured to be radially opened with respect to said central axis of rotation (Z) toward an internal surface (16) of said pre-hole (12) to exert on said untreated wheel (11) a holding action in a radial centrifugal direction, from the inside toward the outside, with respect to said central axis of rotation (Z), and to transfer the rotation around said central axis of rotation (Z) to said untreated wheel (11);
- a drive device (24) configured to selectively activate/deactivate a divarication of said expansion gripper (15) to hold/release said untreated wheel (11), said drive device (24) comprising a central pin (27) mobile coaxially to said mandrel (13) toward/away from said mandrel (13) and cooperating with said mandrel (13) to determine the activation/deactivation of said expansion gripper (15), said central pin (27) comprising at least one flared portion (29) converging toward said axis of rotation (Z) and cooperating, during use, with said mandrel (13) to determine the activation of said expansion gripper (15);
- at least two tools (17) to work, by removing material, disposed respectively on one side and on the other with respect to a work plane (P) of the untreated wheel (11), said work plane (P) being disposed vertically, essentially orthogonal to said central axis of rotation (Z) in correspondence with said gripping end (14), each of said at least two tools (17) being mounted on a transport slider (18) mobile in at least three degrees of freedom with respect to said work plane (P),
said mandrel (13) being configured to engage said untreated wheel (11), in order to hold it radially and rotate it around said central axis of rotation (Z), exclusively on the respective central hub (19), so that said untreated wheel (11) is free from peripheral supports or holds, so that said at least two tools (17) are able to work, by removing material, said untreated wheel (11) on both faces of said untreated wheel (11), opposite with respect to said work plane (P), keeping said untreated wheel (11) axially positioned without needing to be flipped, on each occasion, with respect to said work plane (P).

2. Equipment as in claim 1, **characterized in that** said flared portion (29) has a truncated-cone shape, being **characterized by** a single angle of inclination (α) which defines its taper.

3. Equipment as in claim 1, **characterized in that** said flared portion (29) has a multi-truncated cone shape, defined by a plurality of truncated-cone surfaces developing around the axis of rotation (Z), **characterized by** angles of inclination (α) different from each other in a progressive manner.

4. Equipment as in claim 1, **characterized in that** said flared portion (29) has a pyramidal shape, in particular truncated pyramidal.

5. Equipment as in any of the claims from 1 to 4, **characterized in that** said mandrel (13) has, in correspondence with said gripping end (14), an aperture (28) which develops coaxially, with respect to said axis of rotation (Z), and is shaped so as to have at least one tapered portion (37), converging toward said axis of rotation (Z), suitable to couple with said flared portion (29) of said central pin (27) of said drive device (24).

6. Equipment as in claim 5, **characterized in that** said tapered portion (37) of said aperture (28) has a taper, or multi-taper, equal to the a taper, or multi-taper, of said flared portion (29) of said central pin (27).

7. Equipment as in any claim hereinbefore, **characterized in that** said mandrel (13) comprises a substantially tubular-shaped body (42) provided with said expansion gripper (15), said body (42) being provided with a groove having a longitudinal development parallel to said axis of rotation (Z) and having a radial depth such as to allow said tools (17) to work said untreated wheel (11) also in proximity to said pre-hole (12).

8. Equipment as in any claim hereinbefore, **characterized in that** said transport sliders (18) are mobile on an inclined plane, downward, with respect to the work plane (P) so as to facilitate the outflow due to gravity of the material removed from said untreated wheel (11).

9. Equipment as in any claim hereinbefore, **characterized in that** said mandrel (13) has a gripping portion (46) associated with the gripping end (14) on the opposite side with respect to the expansion gripper (15), said gripping portion (46) having a substantially cylindrical shape and having a through cavity coaxial with the central axis of rotation (Z), said gripping portion (46) being associated on one side with said gripping end (14) and on the opposite side being able to be held by a tailstock (47) which has a cup-shaped end portion with flare-shaped inclined walls, in particular truncated-cone or similar, said gripping portion (46) having a shape mating with said cup-shaped end portion of said tailstock (47).

10. Method to work, by removing material, an untreated metal wheel (11) provided with a central through pre-hole (12), to produce railway wheels, by using an equipment according to any claim hereinbefore, said method providing to:
- axially insert a gripping end (14) of a mandrel (13) in said pre-hole (12) and rotate said mandrel (13) to determine a rotation of said untreated wheel (11) around a horizontal central axis of rotation (Z);
- hold said untreated wheel (11) in a centrifugal radial direction, from the inside toward the outside, with respect to said central axis of rotation (Z) by means of an expansion gripper (15) provided in correspondence with said gripping end (14), said expansion gripper (15) being radially opened with respect to said central axis of rotation (Z) toward an internal surface (16) of said pre-hole (12) in order to hold said untreated wheel (11) radially and to determine its rotation around said central axis of rotation (Z);
- remove metal material from said untreated wheel (11) by means of at least two tools (17), positioned respectively on one side and on the other with respect to a work plane (P) of the untreated wheel (11), said work plane (P) being disposed vertically, essentially orthogonal to said central axis of rotation (Z) in substantial correspondence with said gripping end (14), said at least two tools (17) each being mounted on a respective transport slider (18) which moves in at least three degrees of freedom with respect to said work plane (P), wherein said transport sliders (18) are mobile on an inclined plane, downward, with respect to the work plane (P) so as to facilitate the outflow due to gravity of the material removed from said untreated wheel (11);
wherein said mandrel (13) engages said untreated wheel (11), in order to hold it radially and rotate it around said central axis of rotation (Z), exclusively on the respective central hub (19), so that said untreated wheel (11) is free from peripheral supports or holds, so that said at least two tools (17) perform the working, by removing material, of said untreated wheel (11) on both faces of said untreated wheel (11), opposite with respect to said work plane (P), keeping said untreated wheel (11) axially positioned without needing to be flipped, on each occasion, with respect to said work plane (P).

11. Method as in claim 10, **characterized in that** said at least two tools (17) work simultaneously on said untreated wheel (11).

## Patentansprüche

1. Vorrichtung zum Bearbeiten, durch Materialentfernung, eines unbehandelten Metallrades (11), das mit einem zentralen durchgehenden Vorloch (12) versehen ist, und zwar, um Eisenbahnräder herzustellen, wobei die Vorrichtung umfasst:
- einen rotierenden Dorn (13), der ein Greifende (14) aufweist, das dazu ausgebildet ist, axial in das Vorloch (12) eingeführt zu werden, um eine Rotation des unbehandelten Rades (11) um eine zentrale Rotationsachse (Z), die horizontal angeordnet ist, zu bestimmen, wobei das Greifende (14) mit einem Spreizgreifer (15) versehen ist, der dazu ausgebildet ist, radial bezüglich der zentralen Rotationsachse (Z) hin zu einer inneren Oberfläche (16) des Vorlochs (12) geöffnet zu werden, um auf das unbehandelte Rad (11) eine Haltewirkung in einer radialen Zentrifugalrichtung, von innen nach außen, bezüglich der zentralen Rotationsachse (Z) auszuüben und die Rotation um die zentrale Rotationsachse (Z) auf das unbehandelte Rad (11) zu übertragen;
- eine Antriebsvorrichtung (24), die dazu ausgebildet ist, selektiv eine Divarikation des Spreizgreifers (15) zu aktivieren/deaktivieren, um das unbehandelte Rad (11) zu halten/freizugeben, wobei die Antriebsvorrichtung (24) einen zentralen Stift (27) umfasst, der koaxial zu dem Dorn (13) in Richtung zu/von dem Dorn (13) beweglich ist und mit dem Dorn (13) zusammenwirkt, um die Aktivierung/Deaktivierung des Spreizgreifers (15) zu bestimmen, wobei der zentrale Stift (27) mindestens einen aufgeweiteten Abschnitt (29) umfasst, der sich zu der Rotationsachse (Z) hin verjüngt und während der Verwendung mit dem Dorn (13) zusammenwirkt, um die Aktivierung des Spreizgreifers (15) zu bestimmen;
- mindestens zwei Werkzeuge (17) zum Bearbeiten durch Materialentfernung, die jeweils auf einer Seite und auf der anderen Seite bezüglich einer Arbeitsebene (P) des unbehandelten Rades (11) angeordnet sind, wobei die Arbeitsebene (P) vertikal im Wesentlichen orthogonal zu der zentralen Rotationsachse (Z) in Entsprechung zu dem Greifende (14) angeordnet ist, wobei jedes der mindestens zwei Werkzeuge (17) auf einem Transportschlitten (18) montiert ist, der in mindestens drei Freiheitsgraden bezüglich der Arbeitsebene (P) bewegbar ist,
wobei der Dorn (13) dazu ausgebildet ist, an dem unbehandelten Rad (11) anzugreifen, um es radial zu halten und es um die zentrale Rotationsachse (Z) zu drehen, und zwar ausschließlich an der jeweiligen zentralen Nabe (19), so dass das unbehandelte Rad (11) frei von peripheren Abstützungen oder Halterungen ist, so dass die mindestens zwei Werkzeuge (17) in der Lage sind, das unbehandelte Rad (11) durch Materialentfernung auf beiden Flächen des unbehandelten Rades (11), die bezüglich der Arbeitsebene (P) entgegengesetzt sind, zu bearbeiten, wobei das unbehandelte Rad (11) axial positioniert gehalten wird, ohne dass es bei jeder Gelegenheit bezüglich der Arbeitsebene (P) umgedreht werden muss.

2. Vorrichtung nach Anspruch 1, **dadurch gekennzeichnet, dass** der aufgeweitete Abschnitt (29) eine Kegelstumpfform aufweist, die durch einen einzelnen Neigungswinkel (α) gekennzeichnet ist, der ihre Verjüngung definiert.

3. Vorrichtung nach Anspruch 1, **dadurch gekennzeichnet, dass** der aufgeweitete Abschnitt (29) eine Mehrfach-Kegelstumpfform aufweist, die durch eine Vielzahl von Kegelstumpfflächen definiert ist, die sich um die Rotationsachse (Z) entwickeln, **gekennzeichnet durch** Neigungswinkel (α), die sich auf progressive Weise voneinander unterscheiden.

4. Vorrichtung nach Anspruch 1, **dadurch gekennzeichnet, dass** der aufgeweitete Abschnitt (29) eine Pyramidenform, insbesondere eine abgeschnittene Pyramidenform, aufweist.

5. Vorrichtung nach einem der Ansprüche 1 bis 4, **dadurch gekennzeichnet, dass** der Dorn (13) in Entsprechung zu dem Greifende (14) eine Öffnung (28) aufweist, die sich koaxial bezüglich der Rotationsachse (Z) entwickelt und so geformt ist, dass sie mindestens einen verjüngten Abschnitt (37) aufweist, der sich zu der Rotationsachse (Z) hin verjüngt und dazu geeignet ist, sich mit dem aufgeweiteten Abschnitt (29) des zentralen Stifts (27) der Antriebsvorrichtung (24) zu koppeln.

6. Vorrichtung nach Anspruch 5, **dadurch gekennzeichnet, dass** der verjüngte Abschnitt (37) der Öffnung (28) eine Verjüngung oder Mehrfachverjüngung aufweist, die gleich der Verjüngung oder Mehrfachverjüngung des aufgeweiteten Abschnitts (29) des zentralen Stifts (27) ist.

7. Vorrichtung nach einem vorstehenden Anspruch, **dadurch gekennzeichnet, dass** der Dorn (13) einen im Wesentlichen rohrförmig geformten Körper (42) umfasst, der mit dem Spreizgreifer (15) versehen ist, wobei der Körper (42) mit einer Nut versehen ist, die eine Längsentwicklung parallel zu der Rotationsachse (Z) aufweist und eine radiale Tiefe aufweist, die es ermöglicht, dass die Werkzeuge (17) das unbehandelte Rad (11) auch in der Nähe des Vorlochs (12) bearbeiten.

8. Vorrichtung nach einem vorstehenden Anspruch, **dadurch gekennzeichnet, dass** die Transportschlitten (18) auf einer geneigten Ebene nach unten, bezüglich der Arbeitsebene (P), beweglich sind, um den Abfluss aufgrund der Schwerkraft des aus dem unbehandelten Rad (11) entfernten Materials zu erleichtern.

9. Vorrichtung nach einem vorstehenden Anspruch, **dadurch gekennzeichnet, dass** der Dorn (13) einen Greifabschnitt (46) aufweist, der dem Greifende (14) auf der gegenüberliegenden Seite bezüglich des Spreizgreifers (15) zugeordnet ist, wobei der Greifabschnitt (46) eine im Wesentlichen zylindrische Form aufweist und eine durchgehende Höhlung aufweist, die koaxial zu der zentralen Rotationsachse (Z) ist, wobei der Greifabschnitt (46) auf einer Seite dem Greifende (14) zugeordnet ist und auf der gegenüberliegenden Seite von einem Reitstock (47) gehalten werden kann, der einen schalenförmigen Endabschnitt mit trichterförmig geneigten Wänden, insbesondere kegelstumpfförmig oder ähnlich, aufweist, wobei der Greifabschnitt (46) eine Form aufweist, die mit dem schalenförmigen Endabschnitt des Reitstocks (47) zusammenpasst.

10. Verfahren zum Bearbeiten, durch Materialentfernung, eines unbehandelten Metallrades (11), das mit einem zentralen durchgehenden Vorloch (12) versehen ist, um Eisenbahnräder herzustellen, unter Verwendung einer Vorrichtung gemäß einem vorstehenden Anspruch, wobei das Verfahren vorsieht:
- ein Greifende (14) eines Dorns (13) axial in das Vorloch (12) einzuführen und den Dorn (13) zu drehen, um eine Rotation des unbehandelten Rades (11) um eine horizontale zentrale Rotationsachse (Z) zu bestimmen;
- das unbehandelte Rad (11) in einer zentrifugalen radialen Richtung, von innen nach außen, bezüglich der zentralen Rotationsachse (Z) mittels eines Spreizgreifers (15), der in Entsprechung zu dem Greifende (14) vorgesehen ist, zu halten, wobei der Spreizgreifer (15) radial bezüglich der zentralen Rotationsachse (Z) zu einer inneren Oberfläche (16) des Vorlochs (12) geöffnet wird, um das unbehandelte Rad (11) radial zu halten und seine Rotation um die zentrale Rotationsachse (Z) zu bestimmen;
- metallisches Material von dem unbehandelten Rad (11) mittels mindestens zweier Werkzeuge (17) zu entfernen, die jeweils auf einer Seite und auf der anderen Seite bezüglich einer Arbeitsebene (P) des unbehandelten Rades (11) positioniert sind, wobei die Arbeitsebene (P) vertikal angeordnet ist, im Wesentlichen orthogonal zu der zentralen Rotationsachse (Z), im Wesentlichen in Entsprechung zu dem Greifende (14), wobei die mindestens zwei Werkzeuge (17) jeweils auf einem jeweiligen Transportschlitten (18) montiert sind, der sich in mindestens drei Freiheitsgraden bezüglich der Arbeitsebene (P) bewegt, wobei die Transportschlitten (18) auf einer geneigten Ebene nach unten, bezüglich der Arbeitsebene (P), bewegbar sind, um den Abfluss aufgrund der Schwerkraft des aus dem unbehandelten Rad (11) entfernten Materials zu erleichtern;
wobei der Dorn (13) an dem unbehandelten Rad (11) angreift, um es radial zu halten und es um die zentrale Rotationsachse (Z) zu drehen, ausschließlich an der jeweiligen zentralen Nabe (19), so dass das unbehandelte Rad (11)frei von peripheren Abstützungen oder Halterungen ist, so dass die mindestens zwei Werkzeuge (17) die Bearbeitung durch Materialentfernung des unbehandelten Rades (11) auf beiden Flächen des unbehandelten Rades (11), die bezüglich der Arbeitsebene (P) entgegengesetzt sind, durchführen, wobei das unbehandelte Rad (11) axial positioniert gehalten wird, ohne dass es bei jeder Gelegenheit bezüglich der Arbeitsebene (P) umgedreht werden muss.

11. Verfahren nach Anspruch 10, **dadurch gekennzeichnet, dass** die mindestens zwei Werkzeuge (17) gleichzeitig auf dem unbehandelten Rad (11) arbeiten.

## Revendications

1. Équipement pour usiner, par enlèvement de matière, une roue métallique non traitée (11) pourvue d'un pré-trou traversant central (12), pour fabriquer des roues ferroviaires, ledit équipement comportant :
- un mandrin rotatif (13) ayant une extrémité de préhension (14) configurée pour être insérée axialement dans ledit pré-trou (12) afin de déterminer une rotation de ladite roue non traitée (11) autour d'un axe de rotation central (Z) disposé horizontalement, ladite extrémité de préhension (14) étant pourvue d'une pince d'expansion (15) configurée pour être radialement ouverte par rapport audit axe de rotation central (Z) vers une surface interne (16) dudit pré-trou (12) afin d'exercer sur ladite roue non traitée (11) une action de maintien dans une direction centrifuge radiale, de l'intérieur vers l'extérieur, par rapport audit axe de rotation central (Z), et pour transférer la rotation autour dudit axe de rotation central (Z) à ladite roue non traitée (11);
- un dispositif d'entraînement (24) configuré pour activer/désactiver sélectivement un écartement de ladite pince d'expansion (15) afin de maintenir/libérer ladite roue non traitée (11), ledit dispositif d'entraînement (24) comportant une broche centrale (27) mobile coaxialement par rapport audit mandrin (13) en se rapprochant/s'écartant dudit mandrin (13) et coopérant avec ledit mandrin (13) pour déterminer l'activation/la désactivation de ladite pince d'expansion (15), ladite broche centrale (27) comportant au moins une partie évasée (29) convergeant vers ledit axe de rotation (Z) et coopérant, pendant l'utilisation, avec ledit mandrin (13) pour déterminer l'activation de ladite pince d'expansion (15);
- au moins deux outils (17) pour usiner, par enlèvement de matière, disposés respectivement d'un côté et de l'autre côté par rapport à un plan d'usinage (P) de la roue non traitée (11), ledit plan d'usinage (P) étant disposé verticalement, sensiblement orthogonal audit axe de rotation central (Z) en correspondance avec ladite extrémité de préhension (14), chacun desdits au moins deux outils (17) étant monté sur un coulisseau de transport (18) mobile selon au moins trois degrés de liberté par rapport audit plan d'usinage (P),
ledit mandrin (13) étant configuré pour venir en prise avec ladite roue non traitée (11), afin de la maintenir radialement et de la faire tourner autour dudit axe de rotation central (Z), exclusivement sur le moyeu central (19) respectif, de sorte que ladite roue non traitée (11) est exempte de supports ou de retenues périphériques, de sorte que lesdits au moins deux outils (17) peuvent usiner, par enlèvement de matière, ladite roue non traitée (11) sur les deux faces de ladite roue non traitée (11), opposées par rapport audit plan d'usinage (P), en maintenant ladite roue non traitée (11) positionnée axialement sans avoir besoin d'être retournée, à chaque occasion, par rapport audit plan d'usinage (P).

2. Équipement selon la revendication 1, **caractérisé en ce que** ladite partie évasée (29) a une forme de cône tronqué, étant **caractérisée par** un seul angle d'inclinaison (α) qui définit sa conicité.

3. Équipement selon la revendication 1, **caractérisé en ce que** ladite partie évasée (29) a une forme de cône tronqué multiple, définie par une pluralité de surfaces de cône tronqué se développant autour de l'axe de rotation (Z), **caractérisé par** des angles d'inclinaison (α) différents les uns des autres de manière progressive.

4. Équipement selon la revendication 1, **caractérisé en ce que** ladite partie évasée (29) a une forme pyramidale, en particulier pyramidale tronquée.

5. Équipement selon l'une quelconque des revendications 1 à 4, **caractérisé en ce que** ledit mandrin (13) a, en correspondance avec ladite extrémité de préhension (14), une ouverture (28) qui se développe coaxialement, par rapport audit axe de rotation (Z), et est formée de manière à avoir au moins une partie conique (37), convergeant vers ledit axe de rotation (Z), adaptée pour se coupler à ladite partie évasée (29) de ladite broche centrale (27) dudit dispositif d'entraînement (24).

6. Équipement selon la revendication 5, **caractérisé en ce que** ladite partie conique (37) de ladite ouverture (28) a une conicité, ou une conicité multiple, égale à la conicité ou à la conicité multiple, de ladite partie évasée (29) de ladite broche centrale (27).

7. Équipement selon l'une quelconque des revendications précédentes, **caractérisé en ce que** ledit mandrin (13) comporte un corps de forme sensiblement tubulaire (42) pourvue de ladite pince d'expansion (15), ledit corps (42) étant pourvu d'une rainure ayant un développement longitudinal parallèle audit axe de rotation (Z) et ayant une profondeur radiale telle qu'elle permet auxdits outils (17) d'usiner ladite roue non traitée (11) également à proximité dudit pré-trou (12).

8. Équipement selon l'une quelconque des revendications précédentes, **caractérisé en ce que** lesdits coulisseaux de transport (18) sont mobiles sur un plan incliné, vers le bas, par rapport au plan d'usinage (P) de manière à faciliter l'écoulement de sortie dû à la gravité de la matière enlevée de ladite roue non traitée (11).

9. Équipement selon l'une quelconque des revendications précédentes, **caractérisé en ce que** ledit mandrin (13) a une partie de préhension (46) associée à l'extrémité de préhension (14) du côté opposé par rapport à la pince d'expansion (15), ladite partie de préhension (46) ayant une forme sensiblement cylindrique et ayant une cavité traversante coaxiale à l'axe de rotation central (Z), ladite partie de préhension (46) étant associée, d'un côté, à ladite extrémité de préhension (14) et pouvant, du côté opposé, être maintenue par une contre-poupée (47) qui a une partie d'extrémité en forme de cuvette avec des parois inclinées de forme évasée, en particulier de cône tronqué ou similaire, ladite partie de préhension (46) ayant une forme s'adaptant à ladite partie d'extrémité en forme de cuvette de ladite contre-poupée (47).

10. Procédé d'usinage, par enlèvement de matière, d'une roue métallique non traitée (11) pourvue d'un pré-trou traversant central (12), pour produire des roues ferroviaires, en utilisant un équipement selon l'une quelconque des revendications précédentes, ledit procédé comportant
de :
- insérer axialement une extrémité de préhension (14) d'un mandrin (13) dans ledit pré-trou (12) et faire tourner ledit mandrin (13) afin de déterminer une rotation de ladite roue non traitée (11) autour d'un axe de rotation central (Z) horizontal;
- maintenir ladite roue non traitée (11) dans une direction radiale centrifuge, de l'intérieur vers l'extérieur, par rapport audit axe de rotation central (Z) au moyen d'une pince d'expansion (15) agencée en correspondance avec ladite extrémité de préhension (14), ladite pince d'expansion (15) étant ouverte radialement par rapport audit axe de rotation central (Z) vers une surface interne (16) dudit pré-trou (12) afin de maintenir ladite roue non traitée (11) radialement et de déterminer sa rotation autour dudit axe de rotation central (Z);
- enlever de la matière métallique de ladite roue non traitée (11) au moyen d'au moins deux outils (17), positionnés respectivement d'un côté et de l'autre côté par rapport à un plan d'usinage (P) de la roue non traitée (11), ledit plan d'usinage (P) étant disposé verticalement, sensiblement orthogonal audit axe de rotation central (Z) en correspondance substantielle avec ladite extrémité de préhension (14), lesdits au moins deux outils (17) étant chacun montés sur un coulisseau de transport (18) respectif qui se déplace selon au moins trois degrés de liberté par rapport audit plan d'usinage (P), dans lequel lesdits coulisseaux de transport (18) sont mobiles sur un plan incliné, vers le bas, par rapport au plan d'usinage (P) de manière à faciliter l'écoulement de sortie dû à la gravité de la matière enlevée de ladite roue non traitée (11);
dans lequel ledit mandrin (13) vient en prise avec ladite roue non traitée (11), afin de la maintenir radialement et de la faire tourner autour dudit axe de rotation central (Z), exclusivement sur le moyeu central (19) respectif, de sorte que ladite roue non traitée (11) est exempte de supports ou de retenues périphériques, de sorte que lesdits au moins deux outils (17) réalisent l'usinage, par enlèvement de matière, de ladite roue non traitée (11) sur les deux faces de ladite roue non traitée (11), opposées par rapport audit plan d'usinage (P), en maintenant ladite roue non traitée (11) positionnée axialement sans avoir besoin d'être retournée, à chaque occasion, par rapport audit plan d'usinage (P).

11. Procédé selon la revendication 10, **caractérisé en ce que** lesdits au moins deux outils (17) travaillent simultanément sur ladite roue non traitée (11).
